# EUROPEAN PATENT SPECIFICATION

(11) **EP 0 366 435 B1**
(45) Date of publication and mention of the grant of the patent: **23.12.1998**
(21) Application number: 89310984.3
(22) Date of filing: 25.10.1989
(51) Int. Cl.: G06F 17/14

(54) **Orthogonal and inverse orthogonal transform apparatus**
Gerät für die direkte oder umgekehrte orthogonale Transformation
Appareil de transformée orthagonale directe et inverse

(30) Priority: 27.10.1988 JP 271179/88; 27.10.1988 JP 271180/88
(43) Date of publication of application: 02.05.1990
(73) Proprietor: MATSUSHITA ELECTRIC INDUSTRIAL CO., LTD., Kadoma-shi, Osaka-fu, 571 (JP)
(72) Inventor: Juri, Tatsuro, Osaka (JP); Kadano, Shinya, Hirakata-shi (JP)
(74) Representative: Smith, Norman Ian

(56) References cited:
- US-A- 4 717 962
- PROCEEDINGS OF ICASSP 86; IEEE COMPUTER SOCIETY PRESS, NEW YORK, US vol. 2, 7 April 1986, TOKYO, JAPAN pages 1001 - 1004; KING N. NGAN: 'TWO DIMENSIONAL TRANSFORM DOMAIN DECIMATION TECHNIQUES'
- ANNALES DES TELECOMMUNICATIONS; CNET vol. 40, no. 9-10, 1985, ISSY. LES MOULINEAUX, FR pages 1 - 11; M.VETTERLI, H.J.NUSSBAUMER: 'ALGORITHMES DE TRANSFORMATIONS DE FOURIER ET EN COSINUS MONO ET BIDIMENSIONNELS'
- PROCEEDINGS OF 1988 IEEE SYMPOSIUM ON CIRCUITS AND SYSTEMS; IEEE PRESS, NEW YORK, US vol. 2, 7 June 1988, HELSINKY, FINLAND pages 1953 - 1956; C.LOFFLER ET AL: 'ALGORITHM - ARCHITECTURE MAPPING FOR CUSTOM DSP CHIPS'
- IEEE TRANSACTIONS ON COMPUTERS, NEW YORK, US vol. 37, no. 9, September 1988, pages 1145 - 1148; G.F.TAYLOR ET AL: 'AN ARCHITECTURE FOR A VIDEO RATE TWO- DIMENSIONAL FAST FOURIER TRANSFORM PROCESSOR'
- AFIPS CONFERENCE PROCEEDINGS; AFIPS PRESS ARLINGTON,VIRGINIA,US 7 June 1982, HOUSTON,TEXAS,US pages 135 - 142; LAXMI N. BHUYAN ET AL: 'APPLICATIONS OF SIMD COMPUTERS IN SIGNAL PROCESSING'
- SIEMENS FORSCHUNGS UND ENTWICKLUNGSBERICHTE vol. 13, no. 3, 1984, WÜRZBURG, GERMANY pages 100 - 104; M.SCHLICHTE: 'BLOCK-OVERLAP TRANSFORM CODING OF IMAGE SIGNALS'

## Description

### BACKGROUND OF THE INVENTION

The present invention relates to orthogonal transform technique used for image processing.

Digitizing images or audio signals makes high efficiency coding technique more important. As an effective means for high efficiency coding, there is known orthogonal transform coding. Discrete Cosine Transform (DCT) in particular is suitable for high efficiency coding and is used commonly. The calculation formulas for normalized (with the same weighting given to each orthogonal coefficient) eighth order DCT are shown in the following, where X0, ..., X7 in the formulas (1) to (7) represent the sampled input values, Y0, ..., Y7 represent the orthogonally transformed output values, and Ci (i=1, ..., 7) takes a value COS (iπ/16).$\text{Y0 = C4X0 + C4X1 + C4X2 + C4X3 + C4X4 + C4X5} \text{+ C4X6 + C4X7}$$\text{Y1 = C1X0 + C3X1 + C5X2 + C7X3 - C7X4 - C5X5} \text{- C3X6 - C1X7}$$\text{Y2 = C2X0 + C6X1 - C6X2 - C2X3 - C2X4 - C6X5} \text{+ C6X6 + C2X7}$$\text{Y3 = C3X0 - C7X1 - C1X2 - C5X3 + C5X4 + C1X5} \text{+ C7X6 - C3X7}$$\text{Y4 = C4X0 - C4X1 - C4X2 + C4X3 + C4X4 - C4X5} \text{- C4X6 + C4X7}$$\text{Y5 = C5X0 - C1X1 + C7X2 + C3X3 - C3X4 - C7X5} \text{+ C1X6 - C5X7}$$\text{Y6 = C6X0 - C2X1 + C2X2 - C6X3 - C6X4 + C2X5} \text{- C2X6+ C6X7}$$\text{Y7 = C7X0 - C5X1 + C3X2 - C1X3 + C1X4 - C3X5} \text{+ C5X6 - C7X7}$

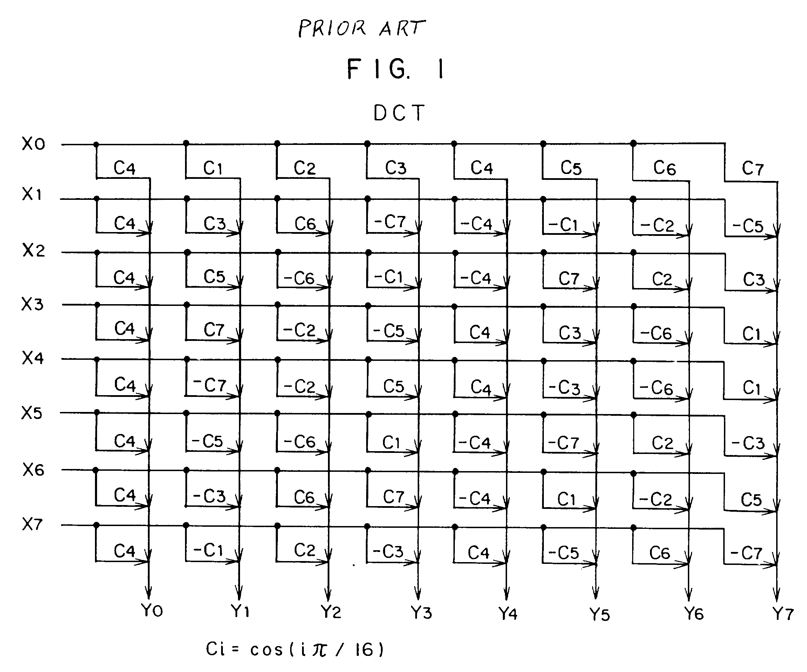

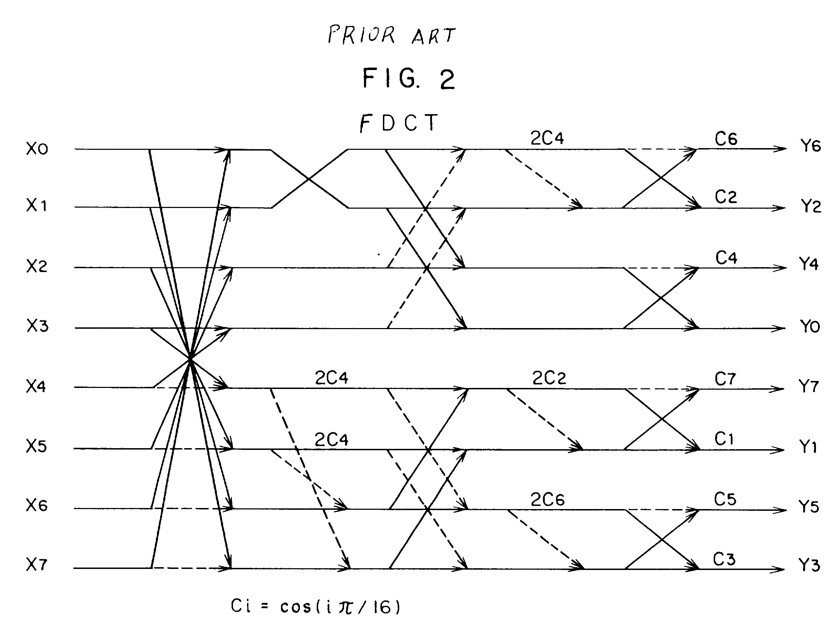

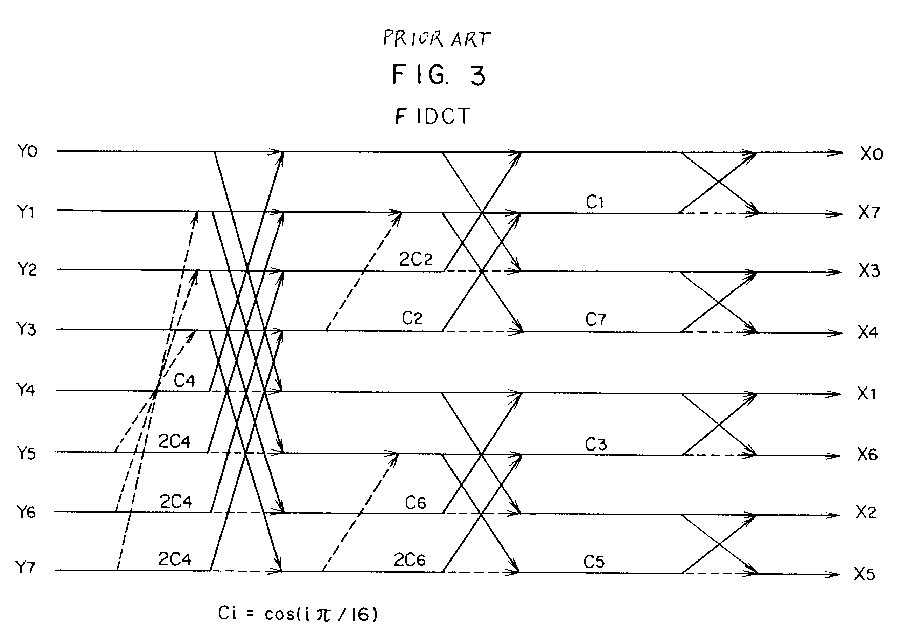

An actual apparatus realizing an eighth order DCT on the basis of the above formulas is shown in Fig. 1. X0, ..., X7 shown in Fig. 1 are eight inputs to the apparatus, and Y0, ..., Y7 are eight outputs therefrom. Each orthogonal coefficient Yi has a higher frequency component the larger the affix number is. Ci (i=1, ..., 7) is a multiplier for multiplying each sampled input by Ci. An intersection between two arrows indicates an addition of two values inputted along the two arrows. With the apparatus shown in Fig. 1, the input values X0, ..., X7 are transformed into orthogonal coefficients Y0, ..., Y7. This DCT apparatus requires 64 multiplications, thereby resulting in a large hardware scale. In view of this, a fast algorithm for reducing the number of multiplications has been presented. Fig. 2 shows an example of an eighth order Fast DCT (FDCT) apparatus. A broken line in Fig. 2 indicates an inversion of plus/minus sign. In the example shown in Fig. 2, FDCT is realized by three stages of butterfly operation (operation of calculating (a+b), (a-b) for the inputs a, b), reducing the number of multiplications to 12. Fig. 3 shows an example of a Fast Inverse DCT (FIDCT). The number of multiplications in this FIDCT is also reduced to 12. The above fast algorithm is also applicable to Discrete Sine Transform (DST).

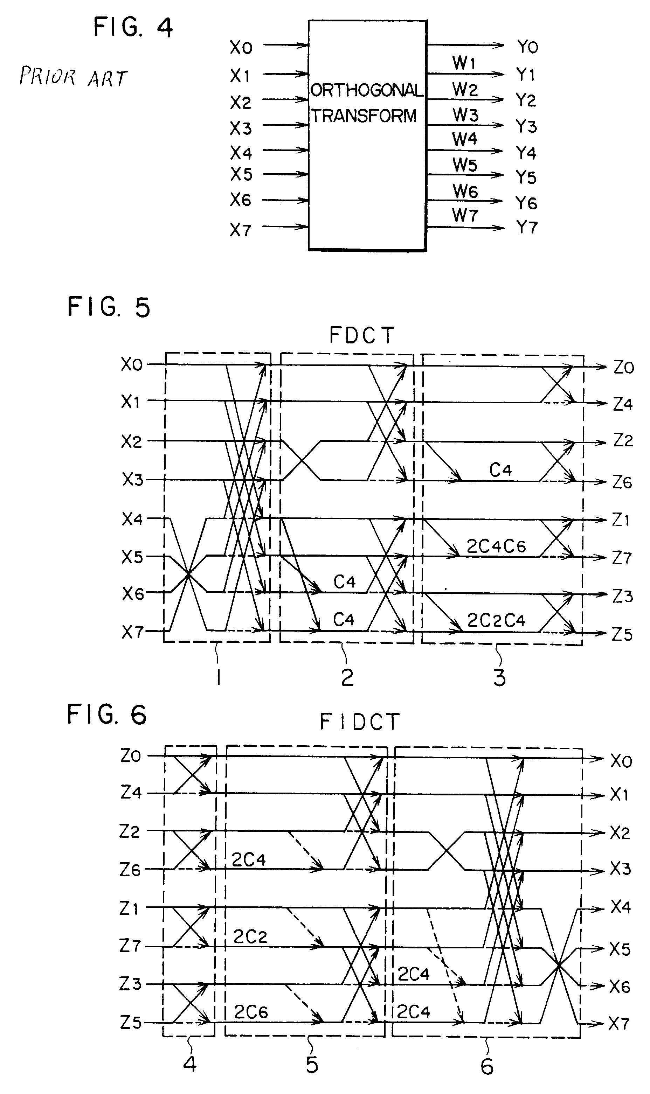

Apart from the above description, human visual sense or acoustic sense is generally more insensitive to distortions of high frequency components than low frequency components. In high efficiency coding, therefore, it often occurs that a large weighting is given to the orthogonal coefficient for low frequency range, whereas a small weighting is given to the orthogonal coefficient for high frequency. For this reason, multiplication for weighting each orthogonal coefficient is generally carried out after the execution of DCT. This is illustrated in Fig. 4 wherein of eight orthogonal coefficient outputs from an eighth order DCT apparatus, seven outputs are weighted by multiplying them by constants W1, ..., W7. As will be understood, weighting for N orthogonal coefficients generally requires multiplication of (N-1) times.

Further, in conventional FDCT or FDST, N (=2^{m})-th order orthogonal transform or inverse orthogonal transform requires multiplication as many as m x 2^{m-1} times at a minimum. It is therefore necessary for real time image processing to perform considerably fast multiplication. In addition, if weighting is necessary, additional multiplications are required to thereby make it more difficult to realize an actual apparatus. For example, consider the case of two-dimensional (8x8) DCT for an image block composed of horizontal 8 pixels and vertical 8 pixels, 64 pixels in total. It requires multiplications 12 x 8 times in the horizontal direction and 12 x 8 times in the vertical direction, totaling 192 multiplications. If 64 pixels are weighted after two-dimensional DCT, additional 63 multiplications are required, resulting in the number of multiplications of 255 times.

In a conventional example shown in Fig. 2, in calculating one orthogonal coefficient, multiplication is serially performed m (=3) times at a maximum. If multiplication for weighting is included, the total 4 multiplications are serially performed. There arises another problem of rounding errors caused by repetitive multiplications.

As described before, human visual sense is relatively insensitive to high frequency distorsions. An orthogonal coefficient for low frequency is therefore necessary to have a higher precision than that for high frequency. However, in a conventional example of FDCT shown in Fig. 2, the final multiplication for each orthogonal coefficient has a larger multiplier the lower the frequency component for the orthogonal coefficient is. Accordingly, before the final multiplication, the higher the frequency component for the orthogonal coefficient is, it has a higher precision. In the example shown in Fig. 2, the precision of the first coefficient (Y1) relative to the seventh coefficient (Y7) before the final multiplication is:$\text{C7/C1 = COS (7π/16)/COS (π/16)} \text{= about 1/5 of the seventh coefficient} \text{(Y7).}$ Accordingly, the orthogonal coefficient for low frequency which takes an important role from the standpoint of visual sense, has larger operation errors.

Another prior art apparatus is described in an article by C. Loeffler et al entitled "Algorithm - Architecture Mapping for Custom DSP Chips". Proceedings of 1988 IEEE Symposium on Circuits and systems, IEEE Press, New York US Vol. 2, 7 June 1988, Helsinki Finland, Pages 1953-1956. This apparatus also requires a relatively large number of multiplications.

### SUMMARY OF THE INVENTION

It is an object of the present invention to solve the above problems associated with the conventional technique, and provide an orthogonal and inverse orthogonal transform apparatus capable of being easily realized by reducing the number of multiplications and multiplier devices, while making operation errors to be caused by multiplications small.

According to the present invention there is provided an orthogonal transformation apparatus constructed to effect high efficiency coding in digitizing image signals and audio signals by performing N-th order orthogonal transformations in which N input signal data are transformed to N orthogonal coefficients by utilizing a selected one of Discrete Cosine Transform, Inverse Discrete Cosine Transform, Discrete Sine Transform and inverse Discrete Sine Transform, said orthogonal transformation apparatus comprising: resequencing means for resequencing N signal data to N/2 sets of signal data paris; addition and subtraction means for performing addition and/or subtraction between signal data paris so that said signal data pairs are transformed to new signal data pairs; and multiplication means for multiplying signal data by predetermined constants so that said signal data are transformed to new signal data, and for weighting the N orthogonal coefficients with weighting factors, said multiplication means being capable of performing a collective multiplying operation of the transform coefficients and weighting of the coefficients, wherein a portion or all of the weighting factors of an i-th orthogonal coefficient is formed of one of a multiple of, or a combination of the following four sets:
cos(iπ/2N),
sin(iπ/2N),
1/{cos(iπ/2N)}, and
1/{sin(iπ/2N)},
where 0 ≦ i < N,
i is a positive integer including zero, and N is a positive integer greater than i.

With such an apparatus it is possible to considerably reduce the number of multiplications as compared with conventional orthogonal transform.

The present invention also provides an inverse orthogonal transform apparatus wherein in N-th order IDCT (Inverse Discrete Cosine Transform) or IDST (Inverse Discrete Sine Transform), the multiplier (coefficient) used for weighting N orthogonal coefficients Yi (wherein 0 ≦ i < N) in N-th order inverse orthogonal transform is one of, a combination of two or more of, or a multiple of one of, the following four sets:
- COS (iπ/2N)
- SIN (iπ/2N)
- 1/COS (iπ/2N)
- 1/SIN (iπ/2N)
It is therefore possible to considerably reduce the number of multiplications as compared with conventional inverse orthogonal transform.

Embodiments of the present invention further provide an orthogonal transform apparatus wherein there are carried out N/2 sets of butterfly operations in log₂(N) stages, and addition, subtraction or multiplication operation with respect to each butterfly operation, in N-th order DCT (Discrete Cosine Transform) or DST (Discrete Sine Transform).

An embodiment of the present invention also provides an inverse orthogonal transform apparatus wherein there are carried out N/2 sets of butterfly operations in log₂(N) stages, and addition, subtraction or multiplication operation, in N-th order IDCT (Indirect Discrete Cosine Transform) or IDST (Indirect Discrete Sine Transform).

The present invention can also provide an orthogonal transform apparatus wherein weighting in orthogonal transform is greater for an orthogonal coefficient for low frequency than for high frequency. It is therefore possible to process at a low distortion level the low frequency component which takes an important role from the standpoint of visual sense.

Use of the orthogonal and inverse orthogonal transform apparatus of this invention results in reduction in the number of multiplications to the number smaller than one half the conventional, thereby considerably reducing hardware necessary for orthogonal transform. In addition, the number of multiplications serially performed in calculating each orthogonal coefficient is also reduced, so that operation errors to be caused by repetitive multiplications can be suppressed minimum. Further, if the orthogonal transform apparatus of this invention is applied to the two-dimensional orthogonal transform apparatus, it is also possible to reduce the number of multiplications irrespective of whether optional weighting is carried out or not. According to this invention, therefore, an image bandwidth compression apparatus using orthogonal transform such as DCT can be realized in a small circuit scale, providing great practical advantages.

The invention will be described now by way of example only, with particular reference to the accompanying drawings. In the drawings:
Fig. 1 is a diagram illustrating eighth order DCT;
Fig. 2 is a diagram illustrating eighth order FDCT;
Fig. 3 is a diagram illustrating eighth order FIDCT;
Fig. 4 is a diagram illustrating FDCT with weighting;
Fig. 5 is a diagram illustrating FDCT according to a first embodiment of this invention;
Fig. 6 is a diagram illustrating FIDCT according to the first embodiment of this invention;
Fig. 7 is a diagram illustrating FDCT according to a second embodiment of this invention;
Fig. 8 is a diagram illustrating FIDCT according to a second embodiment of this invention; and
Fig. 9 is a block diagram showing a third embodiment of the orthogonal transform apparatus according to the present invention.

### DESCRIPTION OF THE PREFERRED EMBODIMENTS

The invention will be described in more detail in conjunction with the preferred embodiments. The present invention improves a conventional FDCT by using specific weighting. First, by using the following formulas:$\text{A0 = X0 + X7}$$\text{A1 = X1 + X6}$$\text{A2 = X2 + X5}$$\text{A3 = X3 + X4}$$\text{A4 = X0 - X7}$$\text{A5 = X1 - X6}$$\text{A6 = X2 - X5}$$\text{A7 = X3 - X4}$ the normalized eighth order DCT calculation formulas (1), ..., (8) described with respect to the background of the invention, are changed in the form of:$\text{Y0 = C4 (A0 + A1 + A2 + A3)}$$\text{Y1 = C1A4 + C3A5 + C5A6 + C7A7}$$\text{Y2 = C2A4 + C6A5 - C6A6 - C2A7}$$\text{Y3 = C3A4 - C7A5 - C1A6 -C5A7}$$\text{Y4 = C4 (A0 - A1 - A2 + A3)}$$\text{Y5 = C5A4 - C1A5 + C7A6 + C3A7}$$\text{Y6 = C6A4 - C2A5 + C2A6 - C6A7}$$\text{Y7 = C7A4 - C5A5 + C3A6 - C1A7}$

The orthogonal coefficients Y0, ..., Y7 given by the formulas (17), ..., (24) are weighted by:
Zi = CiYi (where i = 1, 2, ..., 7)
Z0 = C4Y0
and resequenced to obtain orthogonal coefficients Z0, ..., Z7 which are given by the following formulas (25), ..., (32):$\text{Z0 = C4C4 (A0 + A1 + A2 + A3)}$$\text{Z4 = C4C4 (A0 - A1 - A2 + A3)}$$\text{Z2 = C2C2A0 + C2C6A1 - C2C6A2 - C2C2A3}$$\text{Z6 = C6C6A0 - C2C6A1 + C2C6A2 - C6C6A3}$$\text{Z1 = C1C1A4 + C1C3A5 + C1C5A6 + C1C7A7}$$\text{Z7 = C7C7A4 - C5C7A5 + C3C7A6 - C1C7A7}$$\text{Z3 = C3C3A4 - C3C7A5 - C1C3A6 - C3C5A7}$$\text{Z5 = C5C5A4 - C1C5A5 + C5C7A6 + C3C5A7}$ The formulas (25), ..., (32) are changed by using the following formulas:$\text{C1C1 = (C2 + 1)/2}$$\text{C1C3 = (C4 + C2)/2}$$\text{C1C5 = (C4 + C6)/2}$$\text{C1C7 = C6/2}$$\text{C3C7 = (C4 - C6)/2}$$\text{C5C7 = (-C4 + C2)/2}$$\text{C7C7 = (-C2 +1)/2}$$\text{C2C2 = (C4 +1)/2}$$\text{C2C6 = C4/2}$$\text{C6C6 = (-C4 +1)/2}$$\text{C4C4 = 1/2}$ to obtain the following formulas (44), ..., (51)$\text{2Z0 = A0 + A1 + A2 + A3}$$\text{2Z4 = A0 - A1 - A2 + A3}$$\text{2Z2 = C4 (A0 + A1 - A2 - A3) + A0 - A3}$$\text{2Z6 = -C4 (A0 + A1 - A2 - A3) + A0 - A3}$$\text{2Z1 = {C2 (A4 + A5) + C6 (A6 + A7)}} \text{+ A4 + C4 (A5 + A6)}$$\text{2Z7 = -{C2 (A4 + A5) + C6 (A6 + A7)}} \text{+ A4 + C4 (A5 + A6)}$$\text{2Z3 = {C6 (A4 + A5) - C2 (A6 + A7)}} \text{+ A4 - C4 (A5 + A6)}$$\text{2Z5 = -{C2 (A4 + A5) - C2 (A6 + A7)}} \text{+ A4 - C4 (A5 + A6)}$ The calculation by the formulas (44), ..., (51) are carried out by the following six multiplying formulas and other addition and subtraction operations:$\text{C4 (A0 + A1 - A2 - A3)}$$\text{C2 (A4 + A5)}$$\text{C6 (A4 + A5)}$$\text{C6 (A6 + A7)}$$\text{C2 (A6 + A7)}$$\text{C4 (A5 + A6)}$ Accordingly, if the multiplying formulas (52), ..., (57) are first calculated and the calculation results are used in calculating the formulas (44), ..., (51), then DCT can be achieved by multiplications of only six times, which is 1/2 the number of multiplications in a conventional FDCT described with the background of the invention. Further, in the formulas ,(44), ..., (51), each orthogonal coefficient is calculated upon a single multiplication serially performed, which is 1/3 the above-described conventional FDCT and 1/4 the FDCT with weighting shown in Fig. 4. As a result, operation errors to be caused by repetitive multiplications can be considerably reduced.

Next, by using the following formulas:$\text{C2 = 2C4C6 (C4 + 1)}$$\text{C6 = 2C2C4 (-C4 + 1)}$ the following formulas can be obtained:$\text{C2 (A4 + A5) + C6 (A6 + A7)} \text{= 2C4C6 (C4 + 1) (A4 + A5) + C6 (A6 +A7)} \text{= 2C4C6{(A4 + A5) + C4 (A4 + A5 + A6 + A7)}} \text{= 2C4C6[{A4 + C4 (A5 + A6)}} \text{+{A5 + C4 (A4 + A7)}]} \text{= 2C4C6 (B4 + B5)}$$\text{C6 (A4 + A5) - C2 (A6 + A7)} \text{= 2C2C4 (-C4 + 1) (A4 + A5) - C2 (A6 + A7)} \text{= 2C2C4{(A4 + A5) - C4 (A4 + A5 + A6 + A7)}} \text{= 2C2C4[{A4 - C4 (A5 + A6)}} \text{+{A5- C4 (A4 + A7)}]} \text{= 2C2C4 (BY + B7)}$ where$\text{B4 = A4 + C4 (A5 + A6)}$$\text{B5 = A5 + C4 (A4 + A7)}$$\text{B6 = A4 - C4 (A5 + A6)}$$\text{B7 = A5 - C4 (A4 + A7)}$ and$\text{B0 = A0 + A3}$$\text{B1 = A1 + A2}$$\text{B2 = A0 - A3}$$\text{B3 = A1 - A2}$ By substituting the formulas (60), ..., (69) into the formulas (44), ..., (51), the following formulas are obtained:$\text{Z0 = {B0 + B1}/2}$$\text{Z4 = {B0 - B1}/2}$$\text{Z2 = {B2 + C4 (B2 + B3)}/2}$$\text{Z6 = {B2 - C4 (B2 + B3)}/2}$$\text{Z1 = {B4 + 2C4C6 (B4 + B5)}/2}$$\text{Z3 = {B6 + 2C2C4 (B6 + B7)}/2}$$\text{Z5 = {B6 - 2C2C4 (B6 + B7)}/2}$ The calculation by the formulas (62), ..., (77) are carried out by the following five multiplying formulas and other addition and subtraction operations:$\text{C4 (B2 + B3)}$$\text{C4 (A5 + A6)}$$\text{C4 (A4 + A7)}$$\text{2C4C6 (B4 + B5)}$$\text{2C2C4 (B6 + B7)}$ Accordingly, if the multiplying formulas (78), ..., (82) are first calculated and the calculation results are used in calculating the formulas (62), ..., (77), then DCT can be achieved by multiplications of only five times. FDCT with weighting as obtained by the formulas (9), ..., (16) and (62), ..., (77) is shown in Fig. 5. FDCT shown in Fig. 5 is constructed of three stages of butterfly operations. First butterfly operation means corresponds to the formulas (9), ..., (16), second butterfly operation means to the formulas (62), ..., (69), and third butterfly operation means to the formulas (70), ..., (77). FDCT by the apparatus shown in Fig. 5 is realized, as described previously, by multiplications of 5 times (except multiplied-by-1/2 operations), reducing the number of multiplications to the number smaller than or equal to that of a conventional FDCT shown in Fig. 2. In addition, in weighting in DCT of this embodiment, Xi component is weighted by Ci, thus giving a larger weighting the lower frequency the orthogonal coefficient has. Since human visual sense is generally more insensitive to higher frequency components than lower frequency components, if lower frequency components are coded with much fidelity, it becomes possible to make image quality deterioration visually small. According to the present invention, FDCT executes the above-described weighting so that operation errors at the low frequency components as well as the distortions to be caused by signal processing after DCT can be made small.

Fig. 6 shows FIDCT for the FDCT with weighting shown in Fig. 5. Specifically, FIDCT shown in Fig. 6 has inputs already weighted by 1/Ci. FIDCT can be realized in the same manner as FDCT. The apparatus for this FIDCT is also constructed of first butterfly operation means 4, second butterfly operation means 5, and third butterfly operation means 6. The number of multiplications is five same as that of the apparatus shown in Fig. 5, which is smaller than or equal to 1/2 that of the conventional shown in Fig. 3.

A second embodiment of this invention wherein the number of multiplications is reduced by using specific weighting, will be described.

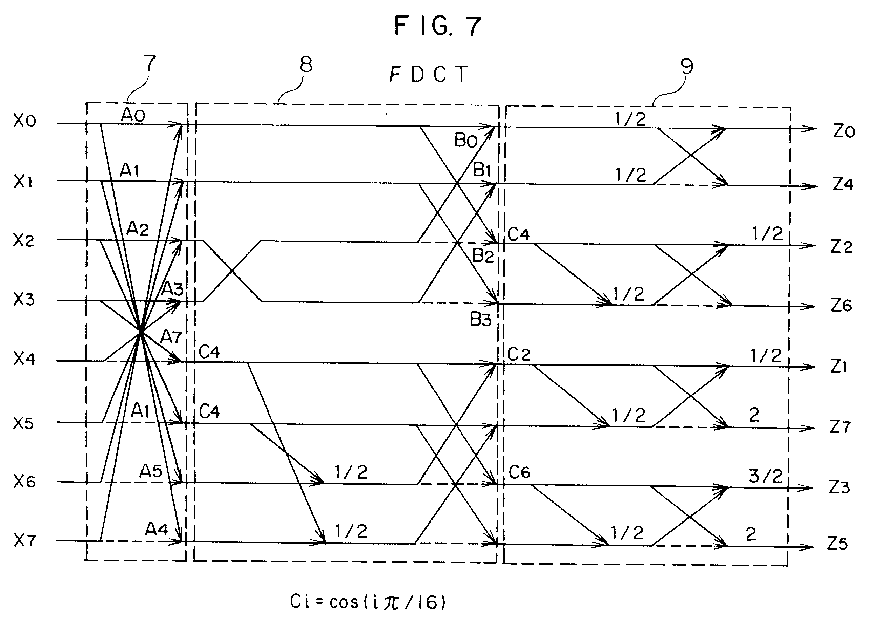

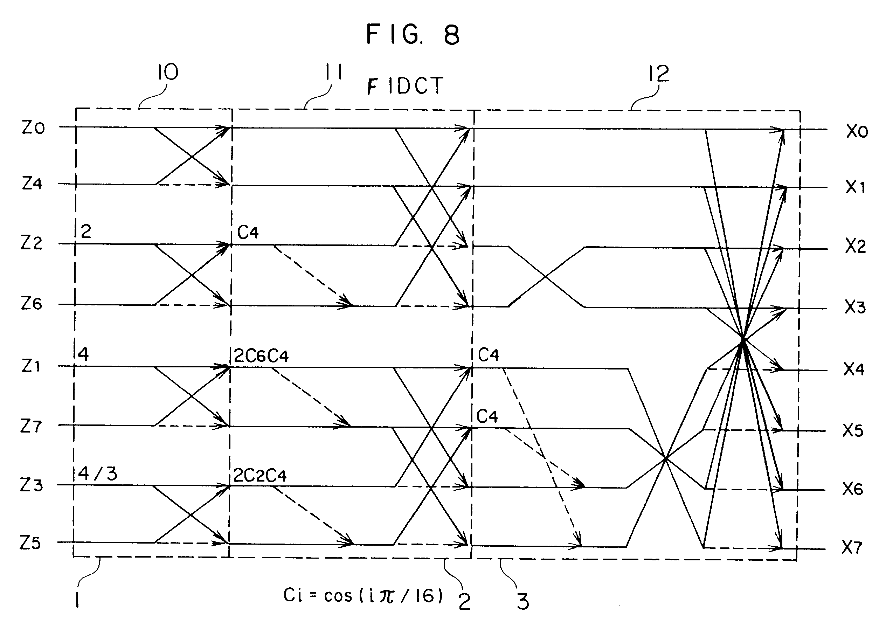

Fig. 7 shows an example of FDCT wherein each orthogonal component Xi is weighted by Wi which is given by:$\text{W0 = 1 = 1.00}$$\text{W1 = C4/S1/4 = 0.91}$$\text{W2 = C4/S2/2 = 0.92}$$\text{W3 = 3*C4/S3/4 = 0.96}$$\text{W4 = C4/S4 = 1.00}$$\text{W5 = C4/S5 = 0.85}$$\text{W6 = C4/S6 = 0.77}$$\text{W7 = C4/S7 = 0.72}$$\text{Si = SIN (iπ/16)}$ The apparatus for FDCT shown in Fig. 7 is constructed of first butterfly operation means 7, second butterfly operation means 8, and third butterfly operation means 9. Fig. 8 shows an example of FIDCT for the FDCT shown in Fig. 7. In Fig. 8, weighting is carried out by using an inverse of the weighting used in the FDCT shown in Fig. 7. The apparatus for FIDCT shown in Fig. 8 is also constructed of first butterfly operation means 10, second butterfly operation means 11, and third butterfly operation means 12. FDCT and FIDCT shown in Figs. 7 and 8 are realized by multiplications of 6 times except the power-of-2 multiplication operations, thus reducing the number of multiplications to the number as small as 1/2 the conventional FDCT and FIDCT.

In the above two embodiments, FDCT and FIDCT have been described which reduce the number of multiplications through weighting. With the above-described specific weighting, DCT and DST can be realized while considerably reducing the number of multiplications in fast orthogonal transform. In N (= 2^{m})-th order orthogonal or inverse orthogonal transform, it is therefore possible to reduce the number of multiplications to (m-2) x 2^{m-1} + 1. The number of multiplications required for the calculation of one orthogonal coefficient also reduces to (m-1). Accordingly, operation errors by multiplications are also made small. Various modifications of this invention are possible. Weighting may be carried out using the following sets:
- COS (iπ/2N)
- SIN (iπ/2N)
- 1/COS (iπ/2N)
- 1/SIN (iπ/2N),
or using other sets derived from the above four sets. These variations are applicable to DCT and DST of an optional dimension order. As seen from the embodiments, the circuit arrangement of FDCT and FIDCT of this invention has many common portions, so that it is possible to combine two circuits for FDCT and FIDCT into a single shared circuit.

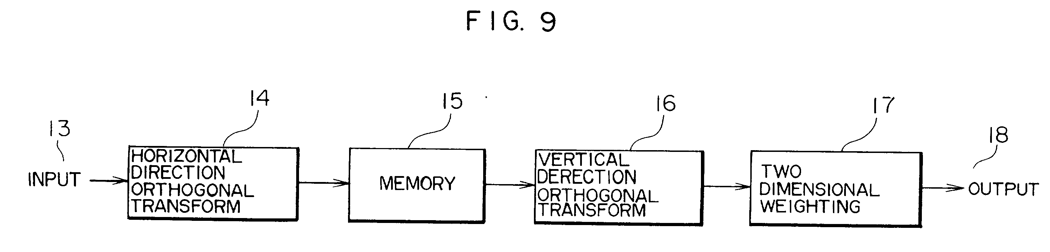

Next, desired two dimensional weighting in the two dimensional orthogonal transform will be described. Fig. 9 is a block diagram showing the third embodiment of this invention. In Fig. 9, reference numeral 13 represents an input unit, 14 an orthogonal transform unit in the horizontal direction, 15 a memory, 16 an orthogonal transform unit in the vertical direction, 17 a two dimensional weighting unit, and 18 an output unit. The orthogonal transform units 14 and 16 in the horizontal and vertical directions are the orthogonal transform apparatus having specific weighting as shown in Fig. 5 or 7. Inputted to the input unit 13 are the data of an image within an rectangular area on the horizontal-vertical two dimensional plane. The inputted image data are first subjected to orthogonal transform in the horizontal direction at the horizontal direction orthogonal transform unit 14. The image data subjected to the orthogonal transform in the horizontal direction are rearranged at the memory 15, and inputted to the vertical direction orthogonal transform unit 16 which orthogonally transforms in the vertical direction, the image data orthogonally transformed in the horizontal direction. The orthogonal coefficients thus two dimensionally and orthogonally transformed are two dimensionally weighted at the two dimensionally weighting unit 17 and out putted to the output unit 18. The orthogonal transform apparatus of this invention is used as the horizontal and vertical direction orthogonal transform units 14 and 16, thereby reducing the number of multiplications. For example, consider two dimensional DCT for a block (8 x 8) composed of horizontal eight pixels and vertical eight pixels totaling 64 pixels as described with the background of the invention. It is necessary to carry out multiplications of total 143 times including:
5 x 8 times in the horizontal direction,
5 x 8 times in the vertical direction, and
63 times for two dimensional weighting.
It is therefore possible to considerably reduce the number of multiplications as compared with a conventional two dimensional DCT with weighting (multiplications of 255 times). Further, with the above embodiments, it is possible to carry out a desired two dimensional weighting and calculate normalized orthogonal coefficients without weighting.

The orthogonal transform apparatus with a small number of multiplications have been described in the above embodiments. The present invention is also applicable to various types of practical circuit arrangements. Further, the present invention may be reduced in practice on CPU or DSP by using software.

## Claims

1. An orthogonal transformation apparatus constructed to effect high efficiency coding in digitizing image signals and audio signals by performing N-th order orthogonal transformations in which N input signal data are transformed to N orthogonal coefficients by utilizing a selected one of Discrete Cosine Transform, Inverse Discrete Cosine Transform, Discrete Sine Transform and inverse Discrete Sine Transform,
said orthogonal transformation apparatus comprising:
resequencing means for resequencing N signal data to N/2 sets of signal data pairs;
addition and subtraction means (1) for performing addition and/or subtraction between signal data pairs so that said signal data pairs are transformed to new signal data pairs; and
multiplication means (2, 3) for multiplying signal data by predetermined constants so that said signal data are transformed to new signal data, and for weighting the N orthogonal coefficients with weighting factors, said multiplication means being capable of performing a collective multiplying operation of the transform coefficients and weighting of the coefficients,
wherein a portion or all of the weighting factors of an i-th orthogonal coefficient is formed of one of a multiple of, or a combination of the following four sets:
cos(iπ/2N),
sin(iπ/2N),
1/{cos(iπ/2N)}, and
1/{sin(iπ/2N)},
where 0 ≦ i < N,
i is a positive integer including zero, and N is a positive integer greater than i.
2. An orthogonal transformation apparatus according to claim 1, wherein a portion or all of multipliers used in the multiplication of said combined multiplication means is 2^{k}, where k is an integer.
3. An orthogonal transformation apparatus according to claim 1, wherein said addition and subtraction means (1) performs N/2 sets of butterfly operations in log₂N stages.
4. An orthogonal transformation apparatus according to claim 2, wherein, the N-th order DCT (discrete Cosine Transform) or DST (Discrete Sine Transform), N/2 sets of butterfly operations in log₂(N) stage are performed, and additions, subtractions or multiplications are carried out between said butterfly operations, respectively.
5. An orthogonal transformation apparatus according to claim 1, wherein said multiplication means (2, 3) weights the orthogonal coefficients representing low frequency components with greater weighting factors as compared with the weighting factors used for the orthogonal coefficients representing high frequency components.
6. An orthogonal transformation apparatus according to claim 1, wherein said orthogonal transformation apparatus is provided with first N-th order orthogonal transformation means, second N-th order orthogonal transformation means and two-dimensional weighting means, and a selected one of said first N-th order orthogonal transformation means and said second N-th order orthogonal transformation means includes one-dimensional weighting means,
wherein a portion or all of the weighting factor of an i-th orthogonal coefficient is formed of one of or a combination of the following four sets:
cos(iπ/2N),
sin(iπ/2N),
1/{cos(iπ/2N)}, and
1/{sin(iπ/2N)),
where 0 ≦ i < N,
i is a positive integer including zero, and N is a positive integer greater than i.

## Patentansprüche

1. Einrichtung zur orthogonalen Transformation, die dazu ausgelegt ist, bei der Digitalisierung von Bildsignalen und Audiosignalen eine Kodierung mit hoher Effizienz zu bewirken, indem orthogonale Transformationen Nter Ordnung durchgeführt werden, bei denen N Eingangssignaldaten in N Orthogonalkoeffizienten transformiert werden unter Verwendung einer ausgewählten Transformation aus der Gruppe aus der diskreten Kosinustransformation, der inversen diskreten Kosinustransformation, der diskreten Sinustransformation und der inversen diskreten Sinustransformation,
wobei die Einrichtung zur orthogonalen Transformation aufweist:
eine Resequenziereinrichtung zum sequentiellen Wiederordnen von N Signaldaten in N/2 Sätze von Signaldatenpaaren;
eine Additions- und Subtraktionseinrichtung (1) zum Ausführen einer Addition und/oder Subtraktion zwischen Signaldatenpaaren, so daß die Signaldatenpaare in neue Signaldatenpaare umgewandelt werden; und
eine Multiplikationseinrichtung (2, 3) zum Multiplizieren von Signaldaten mit vorbestimmten Konstanten, so daß die Signaldaten in neue Signaldaten umgewandelt werden, und zum Gewichten der N Orthogonalkoeffizienten mit Gewichtungsfaktoren, wobei die Multiplikationseinrichtung in der Lage ist, eine kollektive Multiplikationsoperation der Transformationskoeffizienten und Gewichtung der Koeffizienten durchzuführen,
wobei ein Anteil der oder alle Gewichtungsfaktoren eines iten Orthogonalkoeffizienten gebildet ist/sind aus einem der oder einem Vielfachen der, oder aus einer Kombination der folgenden vier Sätze:
cos (iπ/2N),
sin (iπ/2N)
1/{cos(iπ/2N)}, und
1/{sin(iπ/2N)},
wobei 0 ≤ i < N,
und i eine positive ganze Zahl oder 0, und N eine positive ganze Zahl und größer als i ist.

2. Einrichtung zur orthogonalen Transformation nach Anspruch 1, bei der ein Anteil der oder alle bei der Multiplikation der kombinierten Multiplikationseinrichtung verwendeten Multiplikatoren 2^{k} sind, wobei k eine ganze Zahl ist.

3. Einrichtung zur orthogonalen Transformation nach Anspruch 1, bei der die Additions- und Subtraktionseinrichtung (1) N/2 Sätze von Butterflyoperationen (Schmetterlingsoperationen) in log₂N-Stufen durchführt.

4. Einrichtung zur orthogonalen Transformation nach Anspruch 2, bei der, bezüglich der DCT (diskreten Kosinustransformation) Nter Ordnung oder DST (diskreten Sinustransformation) Nter Ordnung, N/2 Sätze von Butterflyoperationen in log₂N-Stufen durchgeführt werden und zwischen den Butterflyoperationen jeweils Additionen, Subtraktionen oder Multiplikationen ausgeführt werden.

5. Einrichtung zur orthogonalen Transformation nach Anspruch 1, bei der die Multiplikationseinrichtung (2, 3) die niedrige Frequenzkomponenten darstellenden Orthogonalkoeffizienten mit größeren Gewichtungsfaktoren im Vergleich zu den für die die höheren Frequenzkomponenten darstellenden Orthogonalkoeffizienten verwendeten Gewichtungsfaktoren gewichtet.

6. Einrichtung zur orthogonalen Transformation nach Anspruch 1, die versehen ist mit einer ersten Einrichtung zur orthogonalen Transformation Nter Ordnung, einer zweiten Einrichtung zur orthogonalen Transformation Nter Ordnung und einer zweidimensionalen Gewichtungseinrichtung und bei der eine aus der ersten Einrichtung zur orthogonalen Transformation Nter Ordnung und der zweiten Einrichtung zur orthogonalen Transformation Nter Ordnung ausgewählte Einrichtung eine eindimensionale Gewichtungseinrichtung aufweist,
wobei ein Anteil der oder alle Gewichtungsfaktoren eines iten Orthogonalkoeffizienten gebildet ist/sind aus einem oder einer Kombination der folgenden vier Sätze:
cos (iπ/2N),
sin (iπ/2N)
1/{cos(iπ/2N)}, und
1/{sin(iπ/2N)},
wobei 0 ≤ i < N,
und i eine positive ganze Zahl oder 0, und N eine positive ganze Zahl und größer als i ist.

## Revendications

1. Appareil de transformée orthogonale conçu pour effectuer un codage d'efficacité élevée dans la numérisation de signaux d'images et de signaux audio en effectuant des transformées orthogonales d'ordre N dans lesquelles N données de signaux d'entrée sont transformées en N coefficients orthogonaux en utilisant l'une sélectionnée d'une transformée en Cosinus Discrets, d'une Transformée en Cosinus Discrets Inverse, d'une Transformée en Sinus Discrets et d'une Transformée en Sinus Discrets Inverse,
ledit appareil de transformée orthogonale comprenant :
des moyens de remise en séquence pour remettre en séquence N données de signaux en N/2 ensembles de paires de données de signaux ;
des moyens (1) d'addition et de soustraction pour effectuer une addition et/ou une soustraction entre des paires de données de signaux afin que lesdites paires de données de signaux soient transformées en nouvelles paires de données de signaux ; et
des moyens (2, 3) de multiplication pour multiplier des données de signaux par des constantes prédéterminées afin que lesdites données de signaux soient transformées en nouvelles données de signaux, et pour pondérer les N coefficients orthogonaux avec des facteurs de pondération, lesdits moyens de multiplication étant capables d'effectuer une opération de multiplication collective des coefficients de transformée et une pondération des coefficients,
dans lequel une partie ou la totalité des facteurs de pondération d'un i^{ème} coefficient orthogonal est formée d'un multiple de, ou d'une combinaison des quatre ensembles suivants :
cos(iπ/2N),
sin(iπ/2N),
1/{cos(iπ/2N)}, et
1/{sin(iπ/2N)},
où 0 _ i < N,
i est un entier positif incluant 0, et N est un entier positif supérieur à i.

2. Appareil de transformée orthogonale selon la revendication 1, dans lequel une partie ou la totalité des multiplieurs utilisés dans la multiplication desdits moyens de multiplication combinés est 2^{k}, où k est un entier.

3. Appareil de transformée orthogonale selon la revendication 1, dans lequel lesdits moyens (1) d'addition et de soustraction effectuent N/2 ensembles d'opérations en papillon en log₂N stades.

4. Appareil de transformée orthogonale selon la revendication 2, dans lequel dans la TCD (Transformée en Cosinus Discrets) ou la TSD (Transformée en Sinus Discrets) du Nème ordre, N/2 ensembles d'opérations en papillon en log₂(N) stades sont effectués et des additions, des soustractions ou des multiplications sont réalisées respectivement entre lesdites opérations en papillon.

5. Appareil de transformée orthogonale selon la revendication 1, dans lequel lesdits moyens (2, 3) de multiplication pondèrent les coefficients orthogonaux représentant des composantes à basse fréquence avec des facteurs de pondération plus grands par comparaison aux facteurs de pondération utilisés pour les coefficients orthogonaux représentant les composantes à haute fréquence.

6. Appareil de transformée orthogonale selon la revendication 1, dans lequel ledit appareil de transformée orthogonale est muni de premiers moyens de transformée orthogonale d'ordre N, de seconds moyens de transformée orthogonale d'ordre N et de moyens de pondération bidimensionnels, et l'un sélectionné desdits premiers moyens de transformée orthogonale d'ordre N et desdits seconds moyens de transformée orthogonale d'ordre N comportent des moyens de pondération monodimensionnels,
dans lequel une partie ou la totalité des facteurs de pondération d'un i^{ème} coefficient orthogonal est formée de l'un, ou d'une combinaison des quatre ensembles suivants :
cos(iπ/2N),
sin(iπ/2N),
1/{cos(iπ/2N)}, et
1/{sin(iπ/2N)},
où 0 _ i < N,
i est un entier positif incluant 0, et N est un entier positif supérieur à i.
